(19) Europäisches Patentamt
European Patent Office
Office européen des brevets

(11) EP 4 685 247 A1

(12) EUROPEAN PATENT APPLICATION
published in accordance with Art. 153(4) EPC

(43) Date of publication:
28.01.2026 Bulletin 2026/05

(51) International Patent Classification (IPC):
$C21C \ 7/04 ^{(2006.01)}$  $B22D \ 11/00 ^{(2006.01)}$
$C21C \ 7/00 ^{(2006.01)}$  $C21C \ 7/06 ^{(2006.01)}$

(21) Application number: 24831418.9

(22) Date of filing: 08.05.2024

(52) Cooperative Patent Classification (CPC):
B22D 11/00; C21C 7/00; C21C 7/04; C21C 7/06;
Y02P 10/20

(86) International application number:
PCT/JP2024/017148

(87) International publication number:
WO 2025/004545 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 JP 2023106550

(71) Applicant: JFE Steel Corporation
Tokyo, 100-0011 (JP)

(72) Inventors:
• NISHINAKA, Kazuki
Tokyo 100-0011 (JP)
• ARAMAKI, Norichika
Tokyo 100-0011 (JP)

(74) Representative: Grünecker Patent- und
Rechtsanwälte
PartG mbB
Leopoldstraße 4
80802 München (DE)

(54) METHOD FOR PRODUCING MOLTEN STEEL AND METHOD FOR PRODUCING CAST SLAB

(57) A molten steel manufacturing method is provided that can explicitly determine the amount of Mg necessary to reduce $Al_2O_3$-based inclusions to fine MgO inclusions.

The molten steel manufacturing method includes adding, to an Al-deoxidized molten steel, metallic Mg or a Mg-containing alloy in an amount determined based on the ratio of the difference in Mg concentration in the molten steel before and after the addition of Mg, to the oxygen concentration in the molten steel before the addition of Mg.

FIG. 2

EP 4 685 247 A1

**Description**

Technical Field

The present invention pertains to a molten steel manufacturing method capable of reducing coarse $Al_2O_3$-based inclusions in molten steel to fine MgO inclusions, and to a related slab manufacturing method.

Background Art

Nonmetallic inclusions in steel affect the quality of steel materials. In particular, the deoxidation of molten steel with aluminum (hereinafter also written as "Al") forms $Al_2O_3$-based inclusions, and these inclusions are coarsened and aggregated to form clusters. Such clusters of coarse $Al_2O_3$-based inclusions cause problems, such as surface defects on steel materials. These problems are addressed by blowing an inert gas into the molten steel or leaving the molten steel still in a ladle to cause the inclusions to float for separation; or controlling the form of nonmetallic inclusions by adding elements.

In the control of nonmetallic inclusion form by the addition of elements, it is known that magnesium (hereinafter written as "Mg") added to molten steel forms fine Mg-containing inclusions. Non Patent Literature 1 discloses that the occurrence of fine Mg-containing inclusions leads to a smaller size of $\gamma$ grains and the steel material achieves high HAZ toughness.

Methods have been proposed in which Mg is added to molten steel to form fine Mg-containing inclusions in the steel. Patent Literature 1 discloses a method in which metallic Mg is vaporized and added to molten steel. Patent Literature 2 discloses a method in which a Mg-containing wire or rod is added to molten steel together with a carrier gas.

Citation List

Patent Literature

PTL 1: Japanese Unexamined Patent Application Publication No. 2017-20064
PTL 2: Japanese Unexamined Patent Application Publication No. 2008-189975

Summary of Invention

Technical Problem

Non Patent Literature 1 and Patent Literatures 1 and 2 disclose the utilization of fine Mg-containing inclusions and the manner in which Mg is added to molten steel, but do not disclose how to determine the amount of Mg that should be added to molten steel in order to suppress clustering of coarse $Al_2O_3$-based inclusions. Thus, these methods have a drawback in that the amount of Mg to be added to molten steel is unknown. The present invention has been made in consideration of this problem in the related art. It is therefore an object of the present invention to provide a molten steel manufacturing method that can explicitly determine the amount of Mg necessary to reduce $Al_2O_3$-based inclusions to fine MgO inclusions, and a slab manufacturing method that uses a molten steel produced by the manufacturing method.

Solution to Problem

The gist of the present invention that solves the above-described problem is as follows.

[1] A molten steel manufacturing method including adding, to an Al-deoxidized molten steel, metallic Mg or a Mg-containing alloy in an amount determined based on a ratio of a difference in Mg concentration in the molten steel before and after the addition of Mg, to an oxygen concentration in the molten steel before the addition of Mg.

[2] The molten steel manufacturing method according to [1], wherein the metallic Mg or the Mg-containing alloy is added to the Al-deoxidized molten steel so as to satisfy expression (1) below:

$$([\text{T. Mg}] - [\text{T. Mg}]_B) / [\text{T. O}] \geq 0.5 \quad \cdots (1)$$

wherein [T. Mg] is a Mg concentration (ppm) in the molten steel after the addition of Mg, $[\text{T. Mg}]_B$ is a Mg concentration (ppm) in the molten steel before the addition of Mg, and [T. O] is an oxygen concentration (ppm) in the molten steel before the addition of Mg.

[3] The molten steel manufacturing method according to [2], wherein a S concentration in the molten steel before the addition of Mg is less than 20 ppm.

[4] A slab manufacturing method including pouring a molten steel produced by the molten steel manufacturing method described in any one of [1] to [3] into a mold of a continuous casting machine, and cooling the molten steel in the mold to continuously cast a slab.

Advantageous Effects of Invention

According to the present invention, the ratio of the difference in Mg concentration before and after the addition of Mg to the oxygen concentration in the molten steel before the addition of Mg has an impact on the grain size of $Al_2O_3$-based inclusions. Determination based on the above ratio can identify the amounts of metallic Mg or a Mg-containing alloy that can reduce coarse $Al_2O_3$-based inclusions into fine MgO inclusions.

Brief Description of Drawings

[Fig. 1] Fig. 1 is a schematic sectional view illustrating exemplary continuous casting equipment capable of carrying out a slab manufacturing method according to an embodiment.

[Fig. 2] Fig. 2 is a graph illustrating relationships between the value of the left side of expression (1) and the estimated maximum size of inclusions described in Table 2. Description of Embodiments

In order to identify the amounts of metallic Mg that can reduce coarse $Al_2O_3$-based inclusions in Al-deoxidized molten steel into a controlled form, the present inventors carried out tests by adding Mg to Al-deoxidized molten steels to study the composition of nonmetallic inclusions in the molten steel and the grain size of inclusions.

The Mg addition tests were made using a scanning electron microscope (hereinafter written as "SEM") that has a particle analysis function capable of detecting and measuring a large number of nonmetallic inclusions in sample molten steels. The composition and the grain size of nonmetallic inclusions in the molten steel after the addition of Mg were studied using an energy dispersive X-ray spectrometer (hereinafter also written as "EDS") combined with this SEM. As a result, the following findings (1) and (2) were obtained.

(1) The volume fraction of inclusions remains almost unchanged before and after the addition of Mg. Fine MgO inclusions that are formed after the addition of Mg result from the reduction of $Al_2O_3$-based inclusions present before the addition.

(2) Fine MgO inclusions cannot be obtained unless at least a certain amount of Mg is added in relation to the concentration of Mg in the molten steel and the concentration of oxygen in the molten steel that have been mixed into the molten steel from refractories (MgO) before the addition of Mg.

In Al-deoxidized molten steel before the addition of Mg, MgO that has been mixed in from refractories gives inclusions. That is, not only $Al_2O_3$ but also $MgO·Al_2O_3$ inclusions are formed and grow to coarse sizes. When the addition of Mg fails to supply a sufficient amount of dissolved Mg to the molten steel containing $MgO·Al_2O_3$ inclusions, the magnesium cannot completely reduce $MgO·Al_2O_3$ inclusions and the molten steel will contain a mixture of fine MgO inclusions and coarse aggregates of $MgO·Al_2O_3$ inclusions.

Thus, the difference in Mg concentration in the molten steel before and after the addition of Mg (the difference between the Mg concentration in the molten steel after the addition of Mg and the Mg concentration in the molten steel before the addition of Mg) is a criterion of whether or not coarse $MgO·Al_2O_3$ inclusions can be reduced. The oxygen concentration in the molten steel serves as an index of the number of inclusions present in the molten steel.

Thus, a molten steel manufacturing method according to an embodiment adopts as an index the ratio of the difference in Mg concentration in the molten steel before and after the addition of Mg, to the oxygen concentration in the molten steel, and adds metallic Mg to the Al-deoxidized molten steel in an amount that is determined based on the above ratio. Specifically, a range of the ratio in which coarse $MgO·Al_2O_3$ inclusions can be reduced to fine MgO inclusions is predetermined, and the amount of metallic Mg to be added is determined so that the ratio will fall within the predetermined range.

The range of the ratio of the difference in Mg concentration in the molten steel before and after the addition of Mg, to the oxygen concentration in the molten steel may be identified beforehand by providing Al-deoxidized molten steels having different amounts of metallic Mg added and thus having different values of the ratio, and estimating the grain size of $Al_2O_3$-based inclusions in the molten steel. In this manner, the amount of metallic Mg to be added to reduce coarse $Al_2O_3$-

based inclusions into fine MgO inclusions can be determined based on the ratio of the difference in Mg concentration in the molten steel before and after the addition of Mg, to the oxygen concentration in the molten steel. The present inventors have completed the present invention by the finding described above. Hereinbelow, an example will be described in which the embodiment of the present invention is applied to a process including converter refining, secondary refining, and continuous casting. The following embodiment illustrates a preferred example of the present invention, and the scope of the present invention is not limited by the present embodiment.

Molten steel tapped from a converter is poured into a ladle and, after secondary refining, is cast on a continuous casting machine. The molten steel manufacturing method according to the present embodiment may be performed on the molten steel in the ladle that has been tapped from the converter and has been deoxidized with Al, the molten steel that has been treated by RH vacuum degassing, or the molten steel in a continuous casting tundish. Because the cleanliness of the molten steel is improved by the circulation flow in an RH vacuum degassing vessel, it is preferable that the molten steel manufacturing method according to the present embodiment be performed between the RH vacuum degassing and the continuous casting.

The form of Mg that is added to the molten steel may be metallic Mg or a Mg-containing alloy. Because metallic Mg has a high vapor pressure and is highly reactive with molten steel, the magnesium that is added to the molten steel is preferably a Mg-containing alloy that has been stabilized by containing Si or Al. Mg may be added to the molten steel by an existing auxiliary material adding method with existing equipment, such as an injection method or a wire feeder method.

Coarse $Al_2O_3$-based inclusions are reduced and the form control from coarse $Al_2O_3$-based inclusions to fine MgO inclusions is achieved when metallic Mg or a Mg-containing alloy is added to molten steel in an amount designed to obtain an appropriate Mg concentration in the steel and thereby the dissolved Mg concentration in the molten steel becomes higher than the deoxidation equilibrium concentration. Mg-containing oxides found in, for example, slag and refractories are incapable of reducing $Al_2O_3$-based inclusions, and therefore the advantageous effects described above cannot be obtained even when such Mg-containing oxides are added to Al-deoxidized molten steel.

In the molten steel manufacturing method according to the present embodiment, the amount of metallic Mg or a Mg-containing alloy to be added to Al-deoxidized molten steel is determined based on the ratio of the difference in Mg concentration before and after the addition of Mg to the oxygen concentration in the molten steel, and the thus-determined amount of the metallic Mg or the Mg-containing alloy is added to the molten steel. This involves preliminary experiments or the like to grasp relationships between the grain size of inclusions and the above ratio, and thereby a range of the ratio in which $MgO·Al_2O_3$ inclusions can be reduced to fine MgO inclusions is predetermined. After the range has been established, measurement of the Mg concentration and the oxygen concentration in the molten steel before the addition of Mg can determine the amount of metallic Mg or a Mg-containing alloy to be added to the Al-deoxidized molten steel.

Specifically, it is preferable that metallic Mg or a Mg-containing alloy be added to the Al-deoxidized molten steel so as to satisfy expression (1) below. Satisfying this ensures that coarse $Al_2O_3$-based inclusions in the molten steel will be reduced and the molten steel that is produced will contain fine MgO inclusions.

$$([T. Mg] - [T. Mg]_B)/[T. O] \geq 0.5 \quad \cdots (1)$$

In the above expression (1), [T. Mg] is the Mg concentration (ppm) in the molten steel after the addition of Mg, [T. Mg]$_B$ is the Mg concentration (ppm) in the molten steel before the addition of Mg, and [T. O] is the oxygen concentration (ppm) in the molten steel before the addition of Mg.

When the left side of expression (1), that is, the ratio of the difference in Mg concentration before and after the addition of Mg to the oxygen concentration in the molten steel is greater than 3.0, the Mg concentration in the molten steel is so high that Mg is aggregated and the grain size of inclusions starts to increase. For these reasons, it is preferable that the metallic Mg or the Mg-containing alloy be added to the Al-deoxidized molten steel so that the ratio of the difference in Mg concentration before and after the addition of Mg to the oxygen concentration in the molten steel will be 3.0 or less.

Mg has high affinity not only for oxygen but also with sulfur. Thus, the reaction Mg + S → MgS occurs when the S concentration in the molten steel before the addition of Mg is high. MgS has a lower density than MgO, and the occurrence thereof results in coarse inclusions. Furthermore, MgS is easily oxidized and coarse inclusions also result from the reaction with oxides in slag and refractories before casting. It is therefore preferable to suppress the formation of MgS, and the S concentration in the molten steel before the addition of Mg is preferably less than 20 ppm.

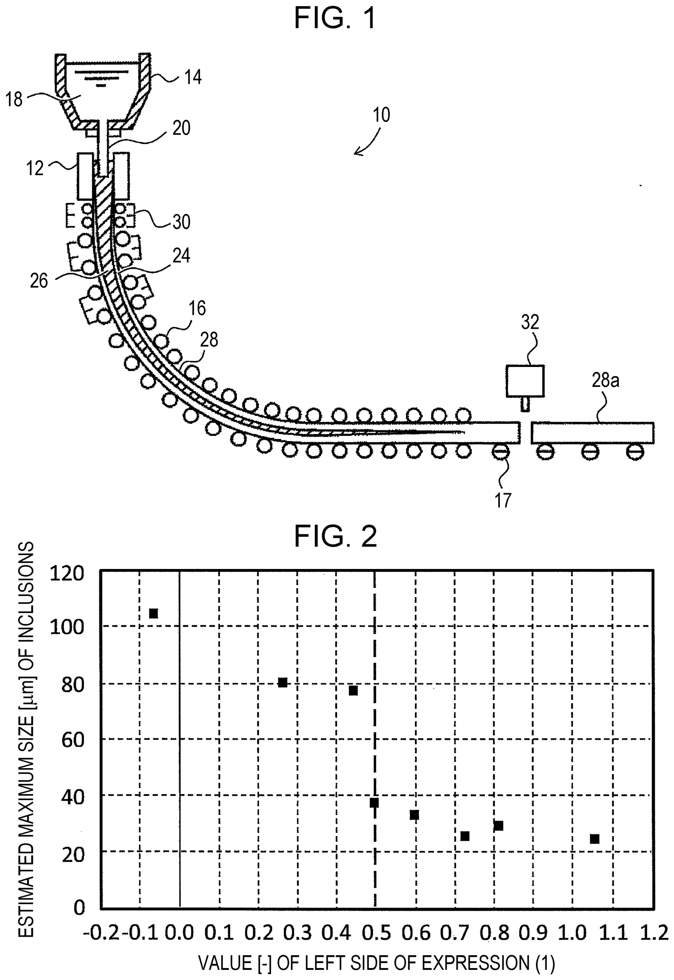

Next, a method for manufacturing a slab using a molten steel produced by the molten steel manufacturing method according to the present embodiment will be described. Fig. 1 is a schematic sectional view illustrating an exemplary continuous casting equipment capable of carrying out the slab manufacturing method according to the present embodiment.

Continuous casting equipment 10 includes a mold 12, a tundish 14 disposed above the mold 12, and a plurality of slab support rolls 16 arranged side by side below the mold 12. Although not illustrated, a ladle containing molten steel 18 is disposed above the tundish 14. The molten steel 18 is poured into the tundish 14 from the bottom of the ladle. The molten steel 18 is a molten steel produced by the molten steel manufacturing method according to the present embodiment, and contains fine MgO inclusions formed by the reduction of coarse $Al_2O_3$-based inclusions.

A submerged nozzle 20 is installed at the bottom of the tundish 14, and the molten steel 18 is poured into the mold 12 through the submerged nozzle 20. Heat is removed from the molten steel 18 through the inner surface of the mold 12 and is thereby cooled and solidified to form a solidifying shell 24. A slab 28 is thus formed that has the solidifying shell 24 as the outer shell and an unsolidified layer 26 of the molten steel 18 inside the outer shell.

In the gaps between slab support rolls 16 adjacent to one another in the casting direction, a plurality of secondary cooling zones 30 with spray nozzles (not shown) are arranged from directly below the mold 12 along the casting direction. The slab 28 being withdrawn is cooled with cooling water sprayed from the spray nozzles of the secondary cooling zones 30. While the slab 28 is delivered on the slab support rolls 16 and is passed through the secondary cooling zones 30, the solidifying shell 24 is appropriately cooled and the solidification of the unsolidified layer 26 progresses. The slab 28 is completely solidified later.

Delivery rolls 17 for continuously delivering the slab 28 are installed downstream in the casting direction. A slab cutter 32 for cutting the slab 28 is disposed above the delivery rolls 17. The slab 28 that has been completely solidified is cut with the slab cutter 32 into predetermined lengths 28a of slab.

The slabs 28a manufactured by the above continuous casting are free from coarse $Al_2O_3$-based inclusions that cause surface defects or other problems in steel materials. Thus, the slab manufacturing method according to the present embodiment can produce slabs 28a that can be further processed into steel materials having less quality defects, such as surface defects.

EXAMPLES

Next, Examples will be described in which the effect of the molten steel manufacturing method according to the present embodiment in inclusion form control was examined. In Examples, metallic Al was added to 250 tons of molten steel tapped from a converter into a ladle and thereby the molten steel was deoxidized. Next, the molten steel was desulfurized. In the desulfurization of the molten steel, $CaO-Al_2O_3-SiO_2$ flux was used as a desulfurization agent. The desulfurization agent was formed into slag by heating the molten steel by graphite electrode arc heating. The molten steel and the desulfurization agent were stirred by blowing Ar gas as a stirring gas at 100 to 150 N $m^3$/h from an injection lance submerged in the molten steel. In this manner, the chemical composition of the molten steel was adjusted as described in Table 1 below.

[Table 1]

| C | Si | Mn | P | Al |
|---|---|---|---|---|
| 0.04 | 0.2 | 1.3 | 0.004 | 0.04 |
| Unit: mass% | | | | |

The desulfurized molten steel was degassed with an RH vacuum degassing device, the molten steel chemical composition was adjusted, and inclusions were caused to float by stirring and were separated. The vacuum degassing refining time was controlled so that the oxygen concentration in the molten steel of each experiment would be 20 ppm or less. The desulfurization time was controlled so that the sulfur concentration in the molten steel of each experiment would be 30 ppm or less.

Mg was added to each of the molten steels having a chemical composition adjusted as described above. The magnesium that was used was an alloy containing Mg and Si (hereinafter written as "MgSi alloy"), and the alloy was added by a wire feeder method. The MgSi alloy was an alloy containing 30 mass% pure Mg and 60 mass% pure Si, the balance being Fe and incidental impurities, and was used as an iron-coated wire (iron shell thickness: 0.04 cm) filled with the MgSi alloy inside. A predetermined amount of the wire of the MgSi alloy was added to the RH degassed molten steel in the ladle at 1580 to 1620°C. Molten steels with different amounts of Mg addition were thus produced.

A portion of each molten steel collected from the molten steel in the ladle after the addition of the MgSi alloy was quenched to give a sample for studying the form of inclusions. The sample was analyzed with a SEM having a particle analysis function, and the distribution of inclusion grain sizes in a measurement range of 40 $mm^2$ per location was measured with respect to 30 locations. The maximum grain size in each distribution was obtained. Assuming that the area for the estimation of the maximum grain size was a sectional area of a slab, the maximum size of inclusions was estimated by extreme value statistics. Table 2 below describes the Mg concentration (ppm) in the molten steel before the addition of Mg, the oxygen concentration (ppm) in the molten steel before the addition of Mg, the Mg concentration (ppm) in the molten steel after the addition of Mg, the S concentration (ppm) in the molten steel before the addition of Mg, the value of the left side of expression (1), and the estimated maximum grain size ($\mu$m) of inclusions in these Examples. In Table 2, [T. Mg]$_B$ is the Mg concentration (ppm) in the molten steel before the addition of Mg, [T. O] is the oxygen concentration (ppm) in the molten steel before the addition of Mg, [T. Mg] is the Mg concentration (ppm) in the molten steel after the addition of Mg, and S concentration is the S concentration (ppm) in the molten steel before the addition of Mg.

[Table 2]

| Experiments Nos. | Component concentrations [ppm] related to expression (1) | | | S concentration [ppm] | Value of left side of expression (1) | Estimated maximum size [μm] | Remarks |
|---|---|---|---|---|---|---|---|
| | $[T. Mg]_B$ | [T. 0] | [T. Mg] | | | | |
| 1 | 1 | 16 | 14 | 10 | 0.81 | 29 | Inv. Ex. |
| 2 | 0 | 20 | 12 | 15 | 0.60 | 32 | |
| 3 | 1 | 11 | 9 | 8 | 0.73 | 25 | |
| 4 | 2 | 6 | 5 | 19 | 0.50 | 37 | |
| 5 | 1 | 18 | 20 | 16 | 1.06 | 24 | |
| 6 | 1 | 15 | 5 | 25 | 0.27 | 80 | Comp. Ex. |
| 7 | 0 | 9 | 4 | 30 | 0.44 | 77 | |
| 8 | 1 | 16 | 0 | 15 | -0.06 | 105 | |

Fig. 2 is a graph illustrating relationships between the value of the left side of expression (1) and the estimated maximum size of inclusions described in Table 2. As illustrated in Fig. 2, the value of the left side of expression (1) (([T. Mg] - $[T. Mg]_B$)/[T. O]) affects the estimated maximum size of inclusions. Thus, the amount of metallic Mg or a Mg-containing alloy to be added to reduce $Al_2O_3$-based inclusions into fine MgO inclusions can be identified based on the value of the left side of expression (1), that is, the ratio of the difference in Mg concentration before and after the addition of Mg to the oxygen concentration in the molten steel before the addition of Mg.

Fig. 2 shows that coarse $Al_2O_3$-based inclusions can be reduced into fine MgO inclusions when the ratio of the difference in Mg concentration before and after the addition of Mg to the oxygen concentration in the molten steel before the addition of Mg is in the range of 0.5 and more. Data described in Table 2 and Fig. 2 are obtained beforehand, and the ratio of the difference in Mg concentration before and after the addition of Mg to the oxygen concentration in the molten steel before the addition of Mg is studied extensively so as to identify the range of the ratio that ensures sufficient reduction of $Al_2O_3$-based inclusions. Once the range has been established, the amount of metallic Mg or a Mg-containing alloy to be added to reduce coarse $Al_2O_3$-based inclusions into fine MgO inclusions can be determined by measuring the Mg concentration and the oxygen concentration before the addition of Mg. By adding the thus-determined amount of the metallic Mg or the Mg-containing alloy to the Al-deoxidized molten steel, it becomes possible to realize molten steel manufacturing in a way that coarse $Al_2O_3$-based inclusions contained in the Al-deoxidized molten steel are reduced to fine MgO inclusions.

As illustrated in Fig. 2, the maximum grain size of inclusions was markedly small when the value of the left side of expression (1) was 0.5 or more. These results have confirmed that metallic Mg added while satisfying the above expression (1) can reduce coarse $Al_2O_3$-based inclusions contained in Al-deoxidized molten steel into fine MgO inclusions.

The results of Experiments Nos. 1, 2, 4, and 5 have shown that the estimated maximum grain size of inclusions tends to decrease gradually as the value of the left side of expression (1) increases. On the other hand, the estimated maximum grain size of inclusions in Experiment No. 3 was smaller than that of Experiment No. 1 in which the value of the left side of expression (1) was larger. The S concentration in the molten steel before the addition of Mg was lower in Experiment No. 3 than in Experiment No. 1. This is probably the reason why the estimated maximum grain size of inclusions in Experiment No. 3 was smaller than that in Experiment No. 1. These results have shown that a low S concentration (less than 20 ppm) in the molten steel before the addition of Mg advantageously leads to a small maximum grain size of inclusions.

Reference Signs List

10  continuous casting equipment
12  mold
13  mold copper plate
14  tundish

16  slab support roll
17  delivery roll
18  molten steel
19  molten mold flux
20  submerged nozzle
22  coating
23  dissimilar material-filled portion
24  solidifying shell
26  unsolidified layer
28  slab
30  secondary cooling zone
32  slab cutter

**Claims**

1.  A molten steel manufacturing method comprising adding, to an Al-deoxidized molten steel, metallic Mg or a Mg-containing alloy in an amount determined based on a ratio of a difference in Mg concentration in the molten steel before and after the addition of Mg, to an oxygen concentration in the molten steel before the addition of Mg.

2.  The molten steel manufacturing method according to claim 1, wherein the metallic Mg or the Mg-containing alloy is added to the Al-deoxidized molten steel so as to satisfy expression (1) below:

$$([T. Mg] - [T. Mg]_B)/[T. O] \geq 0.5 \cdots (1)$$

    wherein [T. Mg] is a Mg concentration (ppm) in the molten steel after the addition of Mg, [T. Mg]$_B$ is a Mg concentration (ppm) in the molten steel before the addition of Mg, and [T. O] is an oxygen concentration (ppm) in the molten steel before the addition of Mg.

3.  The molten steel manufacturing method according to claim 2, wherein a S concentration in the molten steel before the addition of Mg is less than 20 ppm.

4.  A slab manufacturing method comprising pouring a molten steel produced by the molten steel manufacturing method described in any one of claims 1 to 3 into a mold of a continuous casting machine, and cooling the molten steel in the mold to continuously cast a slab.

# FIG. 1

# FIG. 2

VALUE [-] OF LEFT SIDE OF EXPRESSION (1)

## INTERNATIONAL SEARCH REPORT

| | International application No. |
|---|---|
| | **PCT/JP2024/017148** |

**A.    CLASSIFICATION OF SUBJECT MATTER**

*C21C 7/04*(2006.01)i; *B22D 11/00*(2006.01)i; *C21C 7/00*(2006.01)i; *C21C 7/06*(2006.01)i
FI:    C21C7/04 B; B22D11/00 A; C21C7/00 H; C21C7/06

According to International Patent Classification (IPC) or to both national classification and IPC

**B.    FIELDS SEARCHED**

Minimum documentation searched (classification system followed by classification symbols)

B22D11/00; C21C7/00-7/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 7-54103 A (NIPPON STEEL CORPORATION) 28 February 1995 (1995-02-28) paragraphs [0007]-[0014], [0017] | 1-4 |
| A | JP 9-287015 A (NIPPON STEEL CORPORATION) 04 November 1997 (1997-11-04) entire text, all drawings | 1-4 |
| A | CN 113913673 A (WUHAN IRON & STEEL CO., LTD.) 11 January 2022 (2022-01-11) entire text, all drawings | 1-4 |

☐ Further documents are listed in the continuation of Box C.          ☑ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **12 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/017148**

| Patent document cited in search report | | | Publication date (day/month/year) | Patent family member(s) | | | Publication date (day/month/year) |
|---|---|---|---|---|---|---|---|
| JP | 7-54103 | A | 28 February 1995 | US | 5690753 | A | |
| | | | | column 2, line 10 to column 9, line 28 | | | |
| | | | | EP | 666331 | A1 | |
| | | | | CN | 1113660 | A | |
| | | | | KR 10-1995-0703662 | | A | |
| JP | 9-287015 | A | 04 November 1997 | (Family: none) | | | |
| CN | 113913673 | A | 11 January 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017020064 A
- JP 2008189975 A